# EUROPÄISCHE PATENTSCHRIFT

(11) **EP 0 888 871 B1**
(45) Veröffentlichungstag und Bekanntmachung des Hinweises auf die Patenterteilung: **30.07.2003**
(21) Anmeldenummer: 98109052.5
(22) Anmeldetag: 19.05.1998
(51) Int. Cl.: B29D 11/00

(54) **Vorrichtung zur Herstellung von Formkörpern aus einer polymerisierbaren Mischung**
Device for producing objects from a polymerisable mixture
Dispositif pour la fabrication d'objets à partir d'un mélange polymérisable

(30) Priorität: 30.06.1997 DE 19727671
(43) Veröffentlichungstag der Anmeldung: 07.01.1999
(73) Patentinhaber: Wöhlk Contact-Linsen GmbH, 24232 Schönkirchen (DE)
(72) Erfinder: Haase, Lothar, 24217 Schönberg (DE)
(74) Vertreter: Hamm, Volker, Dr.

(56) Entgegenhaltungen:
- EP-A- 0 383 425
- EP-A- 0 447 361
- EP-A- 0 657 264
- WO-A-93/04848
- GB-A- 2 185 933
- GB-A- 2 219 413

## Beschreibung

Die Erfindung betrifft eine Vorrichtung zur Herstellung von Formkörpern aus einer polymerisierbaren Mischung, insbesondere optischen Linsen, speziell Kontaktlinsen mit einer ersten Vaterform und einer zweiten Mutterform, wobei beide Formen einen inneren Formhohlraum definieren.

Bei derartigen Vorrichtungen wird in eine Mutterform die zu polymerisierende Mischung eingefüllt und durch aufdrücken der Vaterform ein definierter Hohlraum für den herzustellenden Formkörper geschaffen. Die zuviel eingefüllte Mischung wird dabei in einem dafür vorgesehenen Auffangbehälter gedrückt.

Aus der EP 0 561 480 ist eine Kontaktlinsen-Gießform und Verpackung bekannt, bei welcher aber die beiden Formen ringförmig linienhaft aufeinanderliegen. Dadurch ist aber der Abstand zwischen herzustellendem Formkörper und Überlaufmasse sehr gering und bei der Abtrennung des Formkörpers aus den Formen kann es zu einer Verunreinigung des Formkörpers durch die Überlaufmasse kommen.

Aus der EP 0 383 425 ist insbesondere in den Figuren 2a-c eine Vorrichtung bekannt, bei welcher zwischen herzustellendem Formkörper und Überlaufmasse ein gewisser Abstand gegeben ist. Da aber eine Formhälfte an der Auflagefläche der anderen Formhälfte eine Rundung aufweist, treten beim Ablösen des Formkörpers aus den Formen Probleme auf.

Weitere dieselben Nachteile aufweisenden Vorrichtungen sind aus der EP 0 255 535, GB 2 048 758, GB 2 216 065, US 4,209,289, GB 2 226 977, GB 2 230 730, EP 0 367 513, GB 2 230 730, US 4,284,399 und EP 0 447 361 bekannt.

Aus der EP 0 603 284 ist eine Vorrichtung zum Gießen einer Linse bekannt, bei welcher oben besagte Probleme nicht auftreten. Bei dieser Vorrichtung bildet sich der Abstand zwischen herzustellendem Formkörper und der Überlaufmasse aber erst während des Polymerisationsprozesses aus. Dies ist problematisch, da dadurch der Randbereich des Formkörpers in gewissen Grenzen nicht definiert ist.

Aus EP 0 657 264 ist eine Vorrichtung zur Herstellung einer Kontaktlinse bekannt, die dem Oberbegriff des Anspruchs 1 entspricht und bei der zwei Formhälften einen Formhohlraum definieren, an der Trennlinie der gemeinsamen Kontaktfläche im Formhohlraum aber nicht senkrecht aufeinandertreffen. Dadurch ist der Randbereich der Kontaktlinse wiederum nicht eindeutig definiert.

Aus der US 4,113,224 und der US 4,197,266 sind Vorrichtungen bekannt, bei welchen aber in den jeweiligen Figuren 2 und 8 die Mutter- und Vaterform einen gewissen Abstand zueinander aufweisen, welcher durch Abstandhalter definiert wird. Dadurch wird eine aufwendige Nacharbeit notwendig.

Es ist die Aufgabe der Erfindung eine Vorrichtung zur Herstellung von Formkörpern aus einer polymerisierbaren Mischung, insbesondere zur Herstellung von optischen Linsen, vorzugsweise von Kontaktlinsen zu schaffen, welche fertige, nicht nachzubearbeitende Formkörper liefert und welche eine sichere Trennung dieser Formkörper von der Überlaufmasse sicherstellt.

Diese Aufgabe wird erfindungsgemäß durch den kennzeichnenden Teil des ersten Patentanspruchs gelöst.

Die erfindungsgemäße Vorrichtung dient zur Herstellung von Formkörpern aus einer polymerisierbaren Mischung, welche insbesondere optischen Linsen sein können. Insbesondere sollen mit der Vorrichtung auf dem Auge eines Menschen aufsetzbare Kontaktlinsen herzustellen sein.

Die Vorrichtung besteht im wesentlichen aus einer Vaterform und einer Mutterform, wobei beide Formen einen inneren Formhohlraum definieren.

Damit es zu einer exakten Trennung zwischen dem herzustellenden Formkörper und der zuviel eingefüllten polymerisierbaren Mischung kommt, liegen beide Formen ringförmig flächig auf einer gemeinsamen Kontaktfläche am Formhohlraum ohne Unterbrechung dichtend aufeinander.

Ein zwischen den beiden Formen ausgebildeter Auffangbehälter nimmt dabei die zuviel eingefüllte polymerisierbaren Mischung auf, wobei der Auffangbehälter an zumindest einer der beiden Formen an der Trennlinie der gemeinsamen Kontaktfläche außerhalb des Formhohlraumes ausgebildet ist.

Die beiden Formen treffen an der Trennlinie der gemeinsamen Kontaktfläche im Formhohlraum senkrecht aufeinander. Dadurch wird eine sehr gute Ausbildung des Randes des Formkörpers sichergestellt.

Vorzugsweise sind an zumindest einer der beiden Formen in dem Auffangbehälter Mittel zum Halten der Überlaufmasse in dem Auffangbehälter ausgebildet, damit die Überlaufmasse nach der Polymerisation unter keinen Umständen mit dem erzeugten Formkörper in Berührung kommt.

Das Mittel zum Trennen der Überlaufmassen weg von dem herzustellenden Formkörper nach der Polymerisation in dem Auffangbehälter außerhalb des Formhohlraumes ist vorzugsweise als Hinterschneidung ausgebildet.

Eine weitere, gegebenenfalls zusätzliche Maßnahme zur sicheren Trennung von Überlaufmasse und herzustellendem Formkörper kann in einer Aufrauhung der inneren Oberfläche des Auffangbehälters an zumindest einer der beiden Formen an zumindest einer der Seiten, welche mit dem Überlauf sicher in Kontakt treten, sein.

Die Größe des Auffangbehälter sollte vorzugsweise zwischen 5 und 50%, vorteilhafterweise zwischen 10 bis 30% der Größe des Formhohlraumes aufweisen.

Damit beide Formteile ein definiertes Volumen aufweisen, sollte an der Vaterform und der Mutterform ein oder mehrere Mittel zur Arretierung zumindest in der z-Achse angeordnet sein.

Vorzugsweise sollen dabei die Mittel zur Arretierung zumindest in der z-Achse zapfenförmig sind.

Aber es ist auch vorteilhaft, wenn die Mittel zur Arretierung zumindest in der z-Achse zungenförmig sind.

Unabhängig von der Form der Mittel zur Arretierung sollten diese zumindest in der zur z-Achse senkrechten Ebene gleichmäßig auf dem Umfang der Formen mit einem gewissen Abstand zueinander angeordnet sein, um ein gleichmäßiges Anliegen der beiden Formen aufeinander sicherzustellen.

Zusätzlich ist es vorteilhaft, wenn zwischen Vaterform und Mutterform Mittel zur Lagedefinition der beiden Formen zueinander angeordnet sind. Dadurch erhält man eine feste Lagebeziehung zwischen Vorder- und Rückseite des herzustellenden Formkörpers.

Die Mittel zur Lagedefinition zwischen Vaterform und Mutterform können vorzugsweise zum einen aus einer Erhebung und zum anderen aus einer die Erhebung aufnehmenden Öffnung aufgebaut sein.

Dabei ist es vorteilhaft, wenn die Mittel zur Lagedefinition zwischen Vaterform und Mutterform mehrfach in einem Kreis angeordnet sind. Dadurch kann man definierte, gewünschte Verdrehungen zwischen Vorderseite und Rückseite des herzustellenden Formkörpers erhalten, ohne daß dazu die beiden Formen verändert werden müssen.

Der Abstand der Mittel zur Lagedefinition zwischen Vaterform und Mutterform sollten dabei vorzugsweise auf einem Kreis gleichmäßig sein.

Vorzugsweise sollte der Abstand der Mittel zur Lagedefinition zwischen Vaterform und Mutterform auf einem Kreis in gleichmäßigen Schritten erfolgt, wobei die Schritte einen Winkel von 2 bis 20°, vorteilhafterweise einen Winkel zwischen 5 und 10° haben. Dies entspricht den normalerweise verlangten Werten.

Vorzugsweise sind die Mittel zur Lagedefinition gleichzeitig auch die Mittel zur Arretierung, damit man eine einfache Herstellung der Vorrichtung erhält und diese leicht zu handhaben ist.

Um spätere Nacharbeiten zu vermeiden, sollte der innere Formhohlraum gleich zur Herstellung einer torischen Kontaktlinse ausgestaltet sein.

Es ist dabei auch vorteilhaft, wenn der innere Formhohlraum gleich zur Herstellung einer multifokalen Kontaktlinse ausgestaltet ist.

Eine mittels der Vorrichtung angefertigte Kontaktlinse besitzt den Vorteil, daß keine oder nur eine geringe Nacharbeit bei der Herstellung der Linse notwendig ist, wodurch der Herstellungsprozeß stark verbilligt werden kann.

Die Erfindung wird im folgenden anhand eines Ausführungsbeispiels unter Bezugnahme auf die beiliegenden Figuren, näher erläutert, wobei das nachfolgende Beispiel keinen abschließenden Charakter für die Erfindung hat und weitere vorteilhafte Ausgestaltungen der Erfindung beinhaltet.

Es sind zu sehen in
- Figur 1a: eine erfindungsgemäße Mutterform in Aufsicht;
- Figur 1b: die Mutterform aus Figur 1a im seitlichen Schnitt;
- Figur 2: eine Aufsicht zur Arretierung der Z-Achse;
- Figur 3: eine Detailansicht Mutter- und Vaterform im Schnitt;
- Figur 4a: eine erste Variante zur Arretierung der Z-Achse;
- Figur 4b: eine zweite Variante zur Arretierung der Z-Achse;
- Figur 4c: eine dritte Variante zur Arretierung der Z-Achse; und
- Figur 5: eine weitere Detailansicht einer Variante der in Figur 3 dargestellten erfindungsgemäßen Vorrichtung.

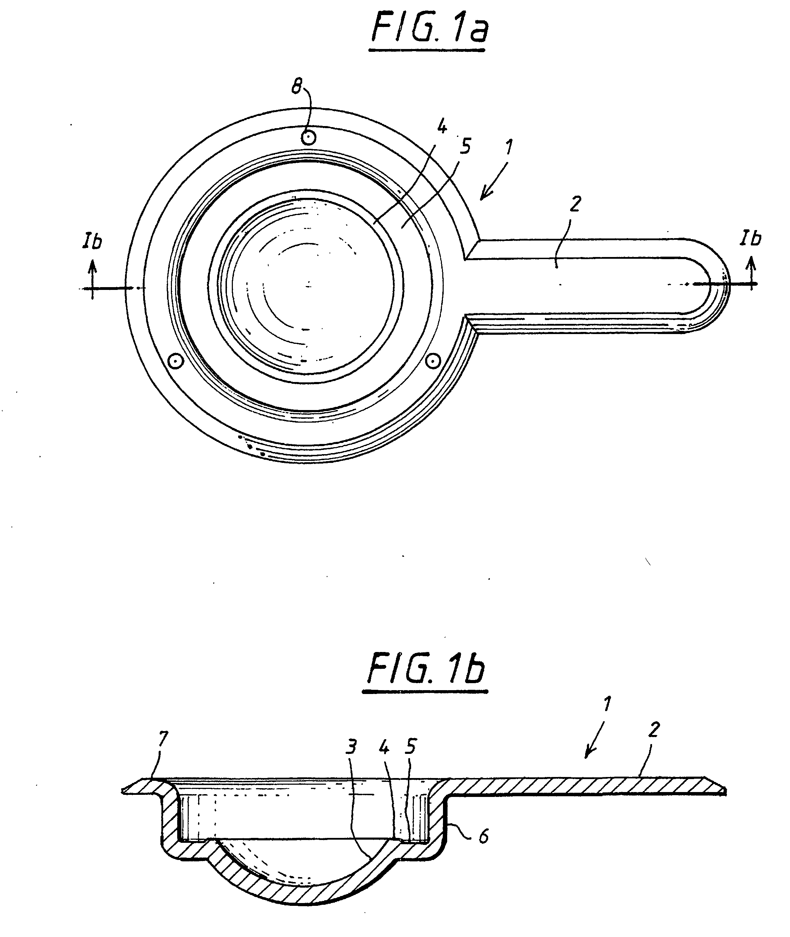

Die in den Figuren 1a und 1b dargestellte Mutterform (1) besitzt einen seitlichen Tragegriff (2), damit die Vorrichtung zur Herstellung von Formkörpern aus einer polymerisierbaren Mischung bestehend aus einer Mutterform (1) und einer in dieser Figur nicht dargestellten Vaterform leichter gehandhabt werden kann.

Die innere Oberfläche (3) des Trogs der Mutterform (1) liefert später die äußere Oberfläche des herzustellenden Formkörpers (in dieser Figur nicht dargestellt), welcher in diesem Fall eine optische Linse zum Aufsetzen auf ein menschliches Auge, auch Kontaktlinse genannt, ist. Bei entsprechender Größe der Mutterform (1) ließe sich aber ebensogut eine Brillenlinse als Formkörper, oder eine intraokulare Kontaktlinse, herstellen.

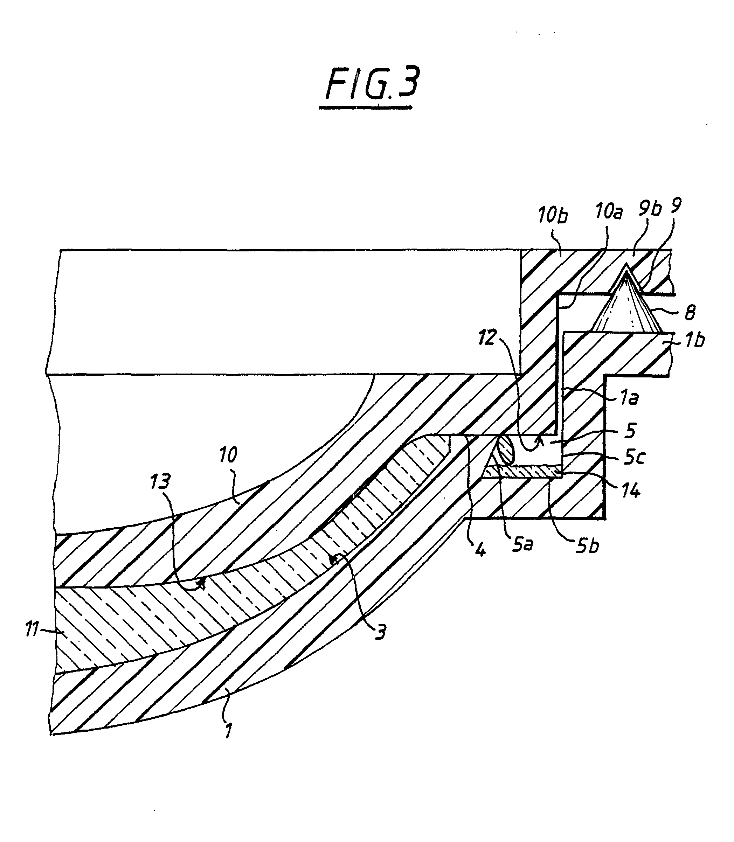

Die Mutterform (1) weist seitlich der inneren Oberfläche (3) des Trogs eine horizontale, umlaufende Planfläche (4) auf, auf welche im zusammengebauten Zustand eine entsprechende Planfläche der Vaterform (in den Figuren 1a, 1b nicht dargestellt) flächig aufliegt. Diese Planfläche (4) ist seitlich abgeflacht und es ist seitlich der Planfläche (4) ein Auffangbehälter (5) für die übergelaufene polymerisierbare Mischung ausgebildet. Detaillierter ist dies in der Figur 3 dargestellt.

Seitlich des Auffangbehälters (5) steigt eine seitliche Begrenzungswand (6) empor, welche in eine obere Planfläche (7) übergeht. Diese obere Planfläche (7) ist mit dem seitlichen Tragegriff (2) verbunden.

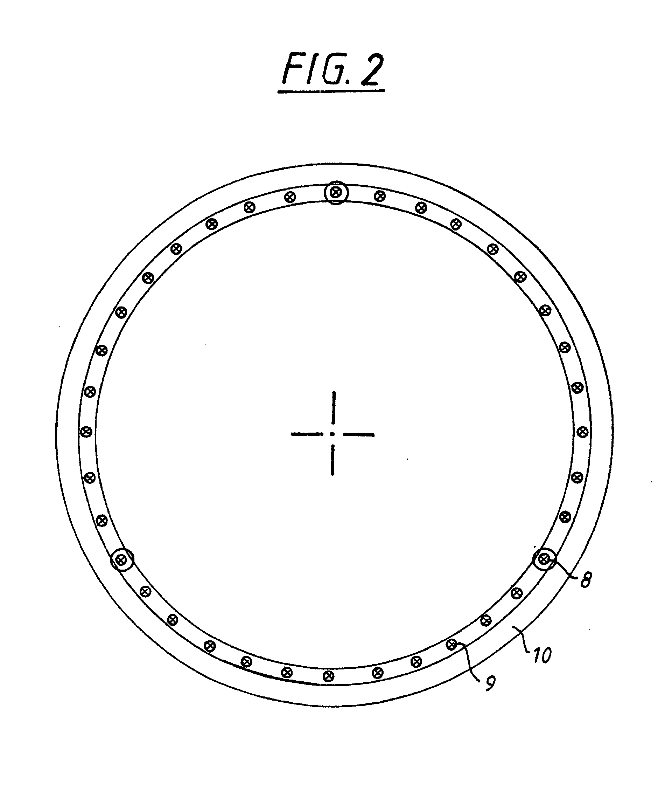

Auf der oberen Planfläche (7) sind Mittel zur Lagedefinition (8) angebracht. Bei der hier dargestellten Mutterform (1) sind drei dieser Mittel (8) auf einem Kreisumfang, welcher seinen Mittelpunkt im Zentrum der inneren Oberfläche (3) hat, in gleichmäßigem Abstand zueinander angeordnet. In diesem speziell dargestellten Beispiel bestehen die auf der Mutterform (1) angebrachten Mittel zur Lagedefinition (8) aus drei Kreiszylinderkegel, deren Spitzen von der Mutterform (1) wegweisen und wie Stachel wirken. Die Anzahl der Mittel zur Lagedefinition muß dabei größer/gleich eins sein, um eine sichere rotatorische Ausrichtung von Mutterform (1) zu Vaterform (10, siehe Figur 2 oder 3) sicherzustellen, wobei aber vorteilhafterweise zwei oder drei Kreiszylinderkegel (8) auf der oberen Planfläche (7) der Mutterform angeordnet sind.

Die Mittel zur Lagedefinition müssen dabei nicht unbedingt als Kreiszylinderkegel ausgebildet sein, sondern können jede gewünschte Form besitzen, welche eine sichere Ladedefinition von Mutterform (1) und Vaterform (siehe Fig. 2) ermöglichen.

Die beschriebenen Kreiszylinderkegel (8) greifen in entsprechende Ausnehmungen (9) (siehe Figur 2) ein und verhindern eine Rotation der Vaterform (10) in der Mutterform (1).

Diese Ausnehmungen (9) auf der Vaterform (10) sind auf einem zur Mutterform (1) entsprechenden Kreisumfang angeordnet. Dabei sind auf der Vaterform (10) in gewissen Winkelabständen viele dieser Ausnehmungen (9) angeordnet, um viele unterschiedliche Verdrehungen zwischen Mutterform (1) und Vaterform (10) einstellen zu können. Die Abstände zwischen zwei Ausnehmungen (9) liegen vorteilhafterweise bei 2° bis 20°, wobei insbesondere Winkelabstände von 5° und 10° möglich sein sollten.

In der Figur 3 ist detailliert dargestellt, wie Mutterform (1) und Vaterform (10) zusammenwirken. Mutterform (1) und Vaterform (10) bilden zusammen einen Formhohlraum (11), welcher das Volumen des herzustellenden Formkörpers definiert. Dabei bildet die innere Oberfläche (3) der Mutterform (1) die äußere Oberfläche der herzustellenden Kontaktlinse aus, während die innere Oberfläche (13) der Vaterform (10) die auf dem Auge des Kontaktlinsenträgers aufliegende Oberfläche der Kontaktlinse ausbildet.

Bei der Füllung der Mutterform (1) vor dem Einsetzen der Vaterform (10) in die Mutterform (1) mit der zu polymerisierenden Mischung wird in der Regel zuviel Mischung für den späteren Formhohlraum (11) eingefüllt. Der nicht benötigte Überschuß (14) der Mischung wird beim Zusammenpressen der Vaterform (10) in die Mutterform (1) abgedrückt, indem die auf der Mutterform (1) am Rande des Formhohlraumes (11) angebrachte Planfläche (4) auf eine entsprechende Planfläche (12) an der Vaterform (10) gedrückt wird. Da diese beiden Planflächen (4, 10) flächig umlaufend vorhanden sind, ohne das es zwischen ihnen eine Verbindungsöffnung gibt, kommt es zu einer Abquetschung der Mischung im Hohlraum (11) von dem Überschuß (14) der Mischung, welche in einem zwischen Mutterform (1) und Vaterform (10) ausgebildeten Auffangbehälter (5) gesammelt wird.

Zumindest die Wände (5a, 5b, 5c) des Auffangbehälters (5) sind so gestaltet, daß der polymerisierte Überlauf gut an ihnen haftet. Die dem Hohlraum (11) am nächsten gelegene Wand (5a) des Auffangbehälters (5) ist hinterschneidend ausgestaltet, so daß bei der Ausformung eine sichere Trennung des Überlaufs (14) von dem Formkörper im Hohlraum (11) sichergestellt ist. Dazu trägt auch bei, daß die beiden Planflächen (4, 12) eine gewisse räumliche Distanz zwischen Hohlraum (11) und Auffangbehälter (5) schaffen.

Oberhalb des Auffangbehälters (5) liegen die Flächen (1a, 10a) von Mutterform (1) und Vaterform (10) so eng beieinander, so daß zwar die überflüssigen Gase aus dem Auffangbehälter (5) entweichen können, nicht aber der Überschuß (14) auslaufen kann.

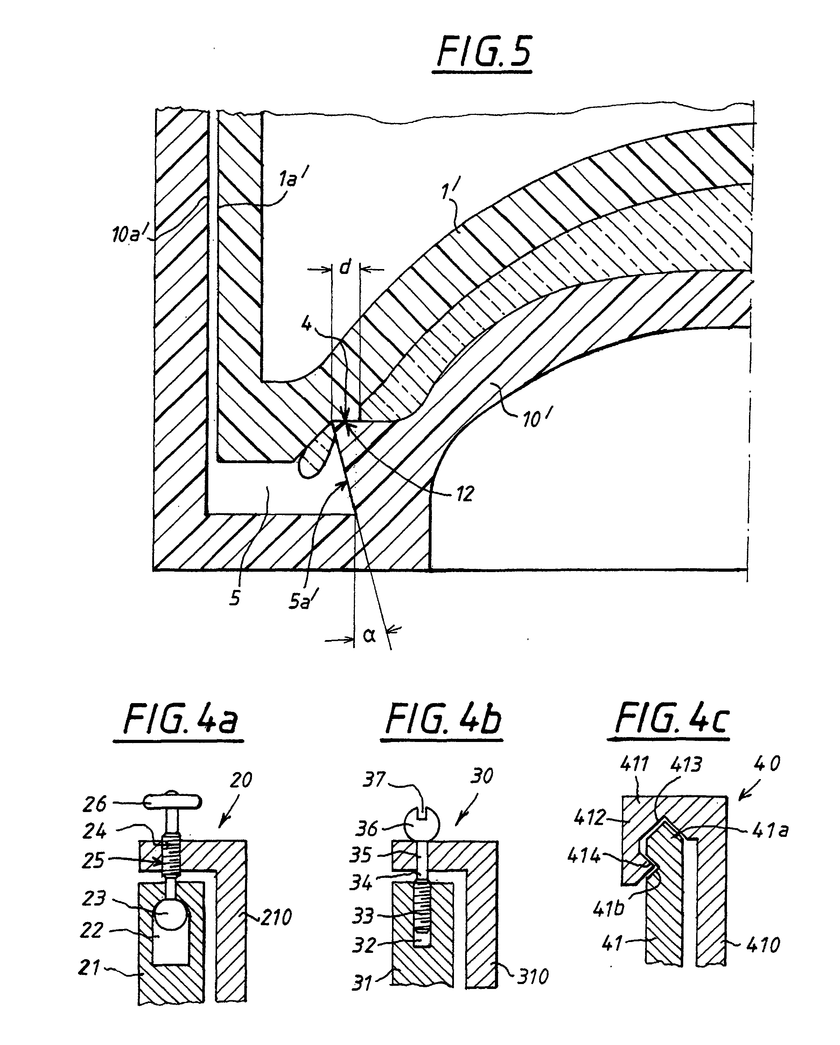

Nach diesem senkrechten Anstieg der Wände von Mutterform (1) und Vaterform (10) besitzen beide einen waagerechten Ansatz (1b, 10b) damit beide Formen (1, 10) gegeneinander verspannt werden können. Wie die Verspannungselemente ausgeführt sein können, ist in den Figuren 4a-c dargestellt. Außerdem sind in diesem Bereich die bereits erwähnten Kreiszylinderkegel (8) sowie die sie aufnehmenden Ausnehmungen (9) angeordnet.

Das in der Figur (4a) dargestellte Verspannelement (20) erlaubt eine einstellbare Lagedefinition der Vaterform (10) in der Mutterform (1). Das Element (20) besteht aus einem Kugelkopf (23), welches in einer Öffnung des Mutterteils eingelassen ist. An diesem Kugelkopf (23) ist ein Gewindestab (24) befestigt, welcher ein Außengewinde trägt und sich in einer Öffnung (25) mit Innengewinde an der Vaterform (210) bewegen kann. An seinem Ende trägt das Lagedefinitionselement (20) ein kleines Stellrad (26), durch dessen Drehung sich eine Anpreßkraft zwischen Mutterform (21) und Vaterform (210) einstellen läßt. (Die Anordnung kann wie auch bei den beiden folgenden beispielhaft genannten Varianten selbstverständlich genau andersherum in Mutter- und Vaterform angeordnet sein.

Bei dem in der Figur 4b dargestellten Lagedefinitionselement (30) befindet sich ein Gewindestab (33) mit Außengewinde in einer Bohrung (32) der Mutterform (1). An diesem Gewindestab (33) befindet sich ein Verlängerungsstab (34), welcher durch eine passende Öffnung (35) in der Vaterform (310) hindurchragt. An dem Ende des Verlängerungsstabes (34) ist ein größerer Körper (36, hier in Form einer Kugel ausgeführt) angeordnet, welcher einen Ansatz für einen Schraubenzieher (Schlitz- oder Kreuz-Schraubenzieher) besitzt. Auch hier kann wie bei dem Lagedefinitionselement (20) aus Figur 4a durch eine Drehung des Lagedefinitionselements (30) der Druck zwischen Vater- (310) und Mutterform (31) verändert werden. Demhingegen kann die Auflagekraft zwischen Vater- und Mutterform bei der in der Figur 4c dargestellten Variante nicht verändert werden. Hier umgreift das Ende (411, 412) der Vaterform (410) das Ende der Mutterform (41), welches seitlich auf beiden Seiten nach innen abgeschrägt ist und somit eine spitze, kreisrunde Endung (41a) besitzt. Diese Spitze (41a) greift in einer entsprechenden Öffnung (413) in der Vaterform, so daß die Vaterform (410) auf der Mutterform (41) drehbar gelagert ist. Am Ende der Vaterform (410) ist eine weitere Spitze (414) ausgebildet, welche in eine entsprechende Öffnung (41b) in der Mutterform (41) unterhalb von deren spitzen Ende (41a) eingreift (auch einrastet oder einklickt). Durch dieses Einrasten der Spitze (414) der Vaterform (410) in die entsprechend ausgestaltete Öffnung (41b) der Mutterform (41) erfolgt die Lagedefinition in der z-Achse der beiden Formen (41, 410) zueinander. Es versteht sich, daß anstelle der Spitzen (41a, 414) auch andere Formen (z.B. Halbkugeln, usw.) verwendet werden können und trotzdem der gewünschte Effekt der Lagedefinition in der z-Achse erzielt wird.

In der Figur 5 ist nun nochmals eine ineinandergesteckte Vaterform (10') in eine Mutterform (1') dargestellt, wobei der Auffangbehälter (5') nun aber in der Vaterform (10') ausgebildet ist. Ansonsten sind die Verhältnisse wie bei dem in der Figur 4 dargestellten Beispiel, so daß auf die dort verwendeten Bezeichnungen (hier zur Unterscheidung jeweils mit einem 'versehen) verwiesen werden kann.

Zu den verwendeten Materialien für Vaterform (10') und Mutterform (1') sei angemerkt, daß das Material bis ca 100° C formstabil sein und sich chemisch möglichst neutral verhalten sollte. Ein Überlauf für überdosiertes Polymer der polymerisierbaren Mischung muß gegeben sein ebenso wie ein sicheres Abformen des Linsenrandes. Wichtig ist eine Zentrierung der Vaterform (10') auf der Mutterform (1') und ein langsames Fügen der beiden Formhälften (10', 1') muß möglich sein und bei der Dimensionierung von Vater- (10') und Mutterform (1') beachtet werden. Es ist wünschenswert, wenn die Formen (1', 10') aus einem transparenten Kunststoff bestehen, welcher veränderbare Haftungseigenschaften besitzt. Ein entsprechend geeigneter Kunststoff wurde Eingangs genannt.

## Patentansprüche

1. Vorrichtung zur Herstellung von Formkörpern aus einer polymerisierbaren Mischung, insbesondere optischen Linsen, speziell Kontaktlinsen mit einer ersten Vaterform (10) und einer zweiten Mutterform (1), wobei beide Formen einen inneren Formhohlraum (11) definieren, beide Formen ringförmig flächig auf einer gemeinsamen Kontaktfläche am Formhohlraum (11) ohne Unterbrechung dichtend aufeinanderliegend sind, ein Auffangbehälter (5) an zumindest einer der beiden Formen an der Trennlinie der gemeinsamen Kontaktfläche außerhalb des Formhohlraums (11) ausgebildet ist, **dadurch gekennzeichnet, dass** beide Formen an der Trennlinie der gemeinsamen Kontaktfläche im Formhohlraum (11) senkrecht aufeinander treffend sind, dass an Vaterform (10) und Mutterform (1) Mittel zur Arretierung zumindest in der z-Achse angeordnet sind, dass die Mittel zur Arretierung zumindest in der z-Achse zapfenförmig oder zungenförmig sind und dass die Mittel zur Arretierung zumindest in der z-Achse gleichmäßig auf dem Umfang der Formen mit einem gewissen Abstand zueinander angeordnet sind.

2. Vorrichtung zur Herstellung von Formkörpern nach Anspruch 1,
**dadurch gekennzeichnet, dass** an zumindest einer der beiden Formen in dem Auffangbehälter (5) Mittel zum Halten der Überlaufinassen in dem Auffangbehälter (5) ausgebildet sind.

3. Vorrichtung zur Herstellung von Formkörpern nach Anspruch 1 oder 2,
**dadurch gekennzeichnet, dass** die Mittel zum Trennen der Überlaufmassen weg von dem herzustellenden Formkörper nach der Polymerisation in dem Auffangbehälter (5) außerhalb des Formhohlraumes (11) als Hinterschneidung ausgebildet sind und/oder dass die innere Oberfläche des Auffangbehälters (5) an zumindest einer der beiden Formen an zumindest einer der Seiten aufgerauht ist, welche mit dem Überlauf sicher in Kontakt treten.

4. Vorrichtung zur Herstellung von Formkörpern nach einem der Ansprüche 1-3,
**dadurch gekennzeichnet, dass** der Auffangbehälter (5) zwischen 5 und 50 %, vorteilhafterweise zwischen 10 bis 30 % der Größe des Formhohlraumes (11) besitzt.

5. Vorrichtung zur Herstellung von Formkörpern nach einem der Ansprüche 1-4,
**dadurch gekennzeichnet, dass** der innere Formhohlraum (11) zur Herstellung einer torischen Kontaktlinse ausgestaltet ist und/oder dass der innere Formhohlraum (11) zur Herstellung einer multifokalen Kontaktlinse ausgestaltet ist.

6. Vorrichtung zur Herstellung von Formkörpern nach einem der Ansprüche 1-5,
**dadurch gekennzeichnet, dass** zwischen Vaterform (10) und Mutterform (1) Mittel zur Lagedefinition (8) der beiden Formen zueinander angeordnet sind, dass die Mittel zur Lagedefinition (8) zwischen Vaterform (10) und Mutterform (1) zum einen aus einer Erhebung und zum anderen aus einer die Erhebung aufnehmenden Öffnung aufgebaut sind, dass mehrere Mittel zur Lagedefinition (8) zwischen Vaterform (10) und Mutterform (1) mehrfach in einem Kreis angeordnet sind, dass der Abstand der Mittel zur Lagedefinition (8) zwischen Vaterform (10) und Mutterform (1) auf dem Kreis gleichmäßig ist und dass der Abstand der Mittel zur Lagedefinition (8) zwischen Vaterform (10) und Mutterform (1) auf einem Kreis in Schritten erfolgt, wobei die Schritte einen Winkel von 2 bis 20°, vorteilhafterweise einen Winkel zwischen 5 und 10° haben.

7. Vorrichtung zur Herstellung von Formkörpern nach Anspruch 6,
**dadurch gekennzeichnet, dass** die Mittel zur Lagedefinition (8) gleichzeitig auch die Mittel zur Arretierung sind.

## Claims

1. Device for producing moulded bodies from a mixture which can be polymerised, in particular optical lenses, especially contact lenses, having a first, father mould (10) and a second, mother mould (1), wherein the two moulds define an internal hollow moulding space (11), the two moulds lie one on top of the other in a flat annular manner in an uninterrupted sealed arrangement on a common contact surface of the hollow moulding space (11), a spill receiver (5) on at least one of the two moulds is formed at the line of separation of the common contact surface outside the hollow moulding space (11), **characterised in that** the two moulds contact each other perpendicularly at the line of separation of the common contact surface in the hollow moulding space (11), that means for immobilisation at least in the z-axis are disposed on the father mould (10) and the mother mould (1), that the means for immobilisation at least in the z-axis are peg-like or tongue-like and that the means for immobilisation at least in the z-axis are disposed uniformly on the periphery of the moulds at a certain distance from each other.

2. Device for producing moulded bodies as claimed in claim 1, **characterised in that** on at least one of the two moulds means are formed in the spill receiver (5) for holding the overflow masses in the spill receiver (5).

3. Device for producing moulded bodies as claimed in claim 1 or 2, **characterised in that** the means for removing the overflow masses away from the moulded bodies, which are to be produced, after the polymerisation are formed as an undercut in the spill receiver (5) outside the hollow moulding space (11) and/or that the inner surface of the spill receiver (5) is roughened on at least one of the two moulds on at least one of the sides which come into definite contact with the overflow.

4. Device for producing moulded bodies as claimed in any one of claims 1 - 3, **characterised in that** the spill receiver (5) is between 5 and 50%, advantageously between 10 to 30% of the size of the hollow moulding body (11).

5. Device for producing moulded bodies as claimed in any one of claims 1 - 4, **characterised in that** the inner hollow moulding space (11) is formed to produce a toric contact lense and/or that the inner hollow moulding space (11) is formed to produce a multifocal contact lens.

6. Device for producing moulded bodies as claimed in any one of claims 1 - 5, **characterised in that** between the father mould (10) and mother mould (1) means (8) for defining the position of the two moulds with respect to each other are disposed, that the means (8) for defining the position between the father mould (10) and mother mould (1) are formed on the one hand by an elevation and on the other hand by a depression receiving the elevation, that a plurality of means (8) for defining the position between the father mould (10) and mother mould (1) are disposed at a number of points to form a circle, that the spacing between the means (8) for defining the position between the father mould (10) and mother mould (1) is uniform around the circle and that the spacing between the means (8) for defining the position between the father mould (10) and mother mould (1) is at intervals around a circle wherein the intervals are at an angle of 2 to 20°, preferably an angle between 5 and 10°.

7. Device for producing moulded bodies as claimed in claim 6, **characterised in that** the position-defining means (8) are simultaneously also the immobilisation means.

## Revendications

1. Dispositif pour la fabrication de corps moulés constitués d'un mélange polymérisable, en particulier de lentilles optiques, tout spécialement de lentilles de contact, avec un premier moule mâle (10) et un deuxième moule femelle (1), les deux moules définissant une cavité interne (11), les deux moules étant placés l'un sur l'autre de manière étanche sans interruption, en formant un anneau, sur toute une surface de contact commune contre la cavité (11), un bac de récupération (5) étant formé sur au moins l'un des deux moules sur la ligne de séparation de la surface de contact commune à l'extérieur de la cavité (11), **caractérisé en ce que** les deux moules se touchent perpendiculairement sur la ligne de séparation de la surface de contact commune dans la cavité (11), **en ce qu'**il y a, sur le moule mâle (10) et sur le moule femelle (1), des moyens de blocage au moins sur l'axe z, **en ce que** les moyens de blocage, du moins sur l'axe z, ont la forme d'une cheville ou d'une languette et **en ce que** les moyens de blocage, du moins sur l'axe z, sont placés régulièrement à une certaine distance l'un de l'autre à la périphérie des moules.

2. Dispositif pour la fabrication de corps moulés selon revendication 1,
**caractérisé en ce que** sur au moins un des deux moules, dans le bac de récupération (5), il y a des moyens permettant de maintenir les masses qui débordent dans le bac de récupération (5).

3. Dispositif pour la fabrication de corps moulés selon revendication 1 ou 2,
**caractérisé en ce que** les moyens destinés à la séparation des masses qui débordent loin du corps moulé à fabriquer après la polymérisation dans le bac de récupération (5) à l'extérieur de la cavité (11) ont la forme d'une contre-dépouille et/ou **en ce que** la surface interne du bac de récupération (5) est rugueuse au moins sur l'un des deux moules sur au moins sur l'un des côtés qui entrent de manière certaine en contact avec le débordement.

4. Dispositif pour la fabrication de corps moulés selon l'une quelconque des revendications 1 à 3, **caractérisé en que** le bac de récupération (5) représente entre 5 et 50 %, de manière avantageuse entre 10 à 30 %, de la taille de la cavité (11).

5. Dispositif pour la fabrication de corps moulés selon l'une quelconque des revendications 1 à 4, **caractérisé en que** la cavité interne (11) est conformée pour la fabrication d'une lentille de contact torique et/ou en ce que la cavité interne (11) est conformée pour la fabrication d'une lentille de contact multifocale.

6. Dispositif pour la fabrication de corps moulés selon l'une quelconque des revendications 1 à 5, **caractérisé en que,** entre le moule mâle (10) et le moule femelle (1), il y a des moyens pour la définition de la position (8) des deux moules l'un par rapport à l'autre, en ce que les moyens pour la définition de la position (8) entre le moule mâle (10) et le moule femelle (1) sont constitués, d'une part, d'une élévation et, d'autre part, d'une ouverture recevant cette élévation, en ce que plusieurs moyens pour la définition de la position (8) entre le moule mâle (10) et le moule femelle (1) sont placés de façon répétée en forme de cercle, en ce que la distance des moyens par rapport à la définition de la position (8) entre le moule mâle (10) et le moule femelle (1) sur le cercle est régulière et en ce que les moyens pour la définition de la position (8) entre le moule mâle (10) et le moule femelle (1) sont distants pas à pas sur un cercle, les pas ayant un angle entre 2 et 20°, de manière avantageuse un angle entre 5 et 10°.

7. Dispositif pour la fabrication de corps moulés selon la revendication 6, **caractérisé en que** les moyens pour la définition de la position (8) sont en même temps les moyens de blocage.
